(19) Europäisches Patentamt
European Patent Office
Office européen des brevets

(11) **EP 4 598 159 A1**

(12) **EUROPEAN PATENT APPLICATION**
published in accordance with Art. 153(4) EPC

(43) Date of publication:
**06.08.2025 Bulletin 2025/32**

(21) Application number: **23871294.7**

(22) Date of filing: **26.05.2023**

(51) International Patent Classification (IPC):
**H04W 56/00** (2009.01) **H04W 84/18** (2009.01)

(52) Cooperative Patent Classification (CPC):
**H04L 12/28; H04W 56/00; H04W 84/18**

(86) International application number:
**PCT/JP2023/019698**

(87) International publication number:
**WO 2024/070048 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.09.2022 JP 2022158677**

(71) Applicant: **Panasonic Holdings Corporation Osaka, 571-8501 (JP)**

(72) Inventors:
• **KOGA, Hisao**
  **Osaka 571-0057 (JP)**
• **IKEZAKI, Issei**
  **Osaka 571-0057 (JP)**
• **IKEDA, Koji**
  **Osaka 571-0057 (JP)**

(74) Representative: **Eisenführ Speiser Patentanwälte Rechtsanwälte PartGmbB Postfach 10 60 78 28060 Bremen (DE)**

(54) **RELAY COMMUNICATION DEVICE, COMMUNICATION METHOD, AND COMMUNICATION SYSTEM**

(57) A relay communication apparatus according to one exemplary embodiment of the present disclosure includes a receiver that receives a first signal transmitted by broadcast from a first communication apparatus; a transmitter that transmits the first signal by broadcast; and a synchronization controller that synchronizes a timing at which a second communication apparatus receiving the first signal transmitted by broadcast from the first communication apparatus transmits the first signal by broadcast and a timing at which the transmitter transmits the first signal by broadcast.

FIG. 11

## Description

Technical Field

The present disclosure relates to a relay communication apparatus, a communication method, and a communication system.

Background Art

Conventionally, multi-hop communication in power line communication (PLC) is known (see, for example, Patent Literature (hereinafter, referred to as "PTL") 1). In this multi-hop communication, a communication network (hereinafter, also simply referred to as a network (NW)) including a plurality of communication terminals including a base unit and a slave unit relays a communication signal between the communication terminals to perform communication between a terminal and another terminal which cannot directly communicate with the terminal. PTL 1 discloses a technology in which a terminal performs unicast transmission to a master, and the master performs broadcast transmission in order to avoid signal collision due to simultaneous broadcast transmission.

Citation List

Patent Literature

PTL 1
Japanese Patent Application Laid-Open No. 2020-036316

Summary of Invention

However, in the above technology, the terminal performs unicast to the master, and accordingly there is a possibility that signals are concentrated on the master, causing a delay. Further, there is a risk that the signal may not reach a terminal far from the master. Note that these matters can occur in both wired and wireless communication.

One non-limiting and exemplary embodiment of the present disclosure facilitates providing a relay communication apparatus, a communication method, and a communication system capable of appropriately performing broadcast transmission in a communication network.

A relay communication apparatus according to one exemplary embodiment of the present disclosure includes: a receiver that receives a first signal transmitted by broadcast from a first communication apparatus; a transmitter that transmits the first signal by broadcast; and a synchronization controller that synchronizes a timing at which a second communication apparatus receiving the first signal transmitted by broadcast from the first communication apparatus transmits the first signal by broadcast and a timing at which the transmitter transmits the first signal by broadcast.

A communication method according to one exemplary embodiment of the present disclosure is performed by a relay communication apparatus, and includes: receiving a first signal transmitted by broadcast from a first communication apparatus; and transmitting the first signal by broadcast in synchronization with a timing at which a second communication apparatus receiving the first signal transmitted by broadcast from the first communication apparatus transmits the first signal by broadcast.

A communication system according to one exemplary embodiment of the present disclosure includes: a first communication apparatus; a second communication apparatus and a third communication apparatus that receive a signal transmitted by broadcast from the first communication apparatus and synchronously transmit the signal by broadcast; and a fourth communication apparatus that receives the signal synchronously transmitted by broadcast by the second communication apparatus and the third communication apparatus.

It should be noted that general or specific embodiments may be implemented as a system, an apparatus, a method, an integrated circuit, a computer program, a storage medium, or any selective combination thereof.

According to one exemplary embodiment of the present disclosure, it is possible to appropriately perform broadcast transmission in a communication network.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

Brief Description of Drawings

FIG. 1A illustrates a multi-hop communication system and communication quality between terminals;
FIG. 1B illustrates communication quality between the terminals;
FIG. 2 illustrates an exemplary configuration of a communication system according to an embodiment of the present disclosure;
FIG. 3 illustrates an exemplary hardware configuration of a terminal according to an embodiment of the present disclosure;
FIG. 4 illustrates an exemplary functional configuration of a CPU of a terminal according to an embodiment of the present disclosure;
FIG. 5 illustrates an example of time stamp acquisition according to an embodiment of the present disclosure;

FIG. 6 is a flowchart illustrating an example of time stamp acquisition at the time of frame reception according to an embodiment of the present disclosure;

FIG. 7 illustrates an example of time synchronization based on communication quality between terminals according to an embodiment of the present disclosure;

FIG. 8 illustrates a virtual TC master port and a virtual TC slave port of a path in the example illustrated in FIG. 7 according to an embodiment of the present disclosure;

FIG. 9 illustrates an exemplary communication frame format according to an embodiment of the present disclosure;

FIG. 10 is a flowchart illustrating a general exemplary operation of broadcast frame synchronization transmission according to an embodiment of the present disclosure;

FIG. 11 illustrates an exemplary operation procedure of broadcast synchronization transmission according to an embodiment of the present disclosure;

FIG. 12 illustrates an exemplary operation procedure of broadcast synchronization transmission according to an embodiment of the present disclosure;

FIG. 13 illustrates an exemplary broadcast frame transmission in a broadcast-dedicated period according to an embodiment of the present disclosure;

FIG. 14A illustrates an example of a topology and an example of ID assignment for terminals according to an embodiment of the present disclosure; and

FIG. 14B illustrates an exemplary broadcast frame transmission in a broadcast-dedicated period according to an embodiment of the present disclosure.

Description of Embodiments

(Background leading to the present disclosure)

In a multi-hop communication system, for example, up to 1,024 terminals are connected within the system, and a relay transmission network of up to 10 hops is constructed with a master terminal as the most upstream terminal. In the system, a relay terminal is automatically selected according to a transmission path state between the terminals, and communication data is relayed between the master terminal and an end terminal. As described above, in the multi-hop communication system, a multi-hop is formed, and multi-hop communication is performed. A high-speed power line communication (PLC) capable of constructing such a multi-hop communication system is known as high definition PLC (HD-PLC). Note that the system may be read as a communication system, a network, a communication network, or the like.

In the multi-hop communication system, each terminal evaluates the communication quality with adjacent terminals, and after the communication quality evaluation, an appropriate relay route is set by the master terminal. A unicast frame is relayed according to the relay route set by the master terminal.

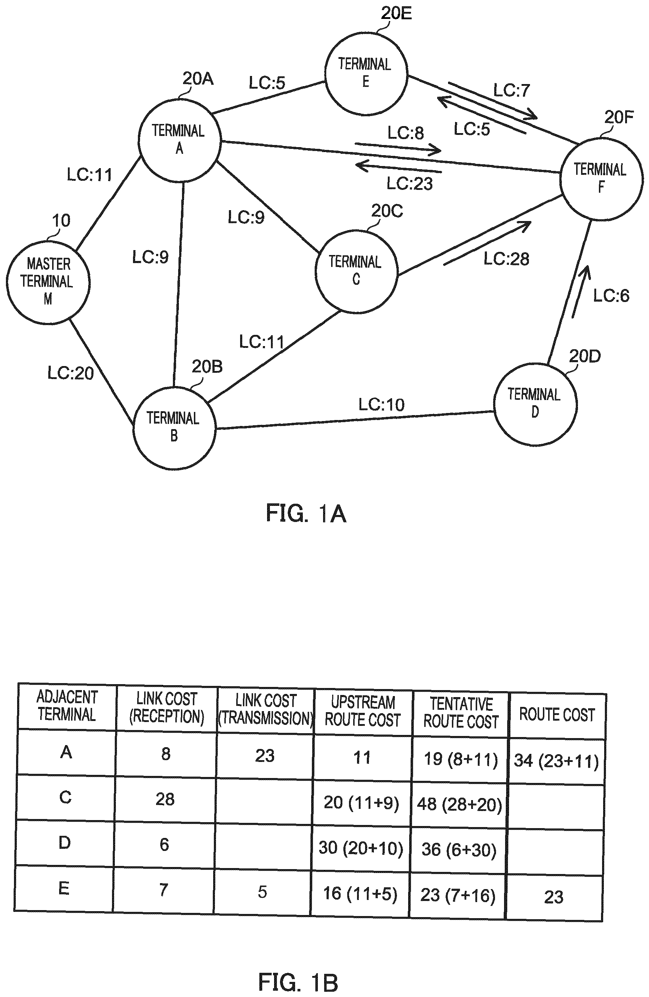

With reference to FIGS. 1A and 1B, an example of a relay route configuration in the multi-hop communication system will be described.

FIG. 1A illustrates a multi-hop communication system including master terminal M 10 and terminals A to F 20A to 20F (terminals A to E 20A to 20E: relay terminals, and terminal F 20F: end terminal). FIG. 1A also illustrates link costs (LCs) representing the communication quality between the terminals.

FIG. 1B illustrates a medium cost including various link costs from the viewpoint of terminal F 20F, as also illustrated in FIG. 1A.

The link cost between terminal F 20F and terminal A 20A is 8 on the reception side and 23 on the transmission side. A route cost of terminal A 20A (referred to as "upstream route cost"), that is, a medium cost representing the reception quality between terminal A 20A and master terminal M 10 is 11. Therefore, a tentative route cost of terminal F 20F via terminal A is 19 (= 8 + 11), considering only the link cost on the reception side. Further, the route cost of terminal F 20F via terminal A is 34 (= 23 + 11) by considering the link cost on the transmission side (since the link cost on the transmission side is larger than the link cost on the reception side).

The link cost between terminal F 20F and terminal C 20C is 28 on the reception side. Since the route cost of terminal C 20C is 20, the tentative route cost and the route cost of terminal F 20F via terminal C are 48.

The link cost between terminal F 20F and terminal D 20D is 6 on the reception side. Since the route cost of terminal D 20D is 30, the tentative route cost and the route cost of terminal F 20F via terminal D are 36.

The link cost between terminal F 20F and terminal E 20E is 7 on the reception side and 5 on the transmission side. Since the route cost of terminal E 20E is 16, the tentative route cost of terminal F 20F via terminal E is 23, considering only the link cost on the reception side. Further, the route cost of terminal F 20F via terminal E is 23, considering the link cost on the transmission side (since the link cost on the reception side is larger than the link cost on the transmission side).

Based on the medium costs described above, master terminal M 10 configures a route to terminal F 20F via terminal E 20E, that is, a relay route of terminal A 20A - terminal E 20E - terminal F 20F. Accordingly, the unicast frame is relayed (transferred) between master terminal M 10 and terminal F 20F via the above-described relay route configured. As described above, in the multi-hop communication system, the relay route is optimized such that the medium cost is minimized and the medium occupation time required for the relay (transfer) is minimized, based on the relay count and the transfer rate of the relay route, with respect to the relay (transfer) of the unicast frame.

Meanwhile, with respect to a broadcast frame, it is necessary to deliver a target frame to all terminals. Therefore, the broadcast frame transmitted from a certain terminal is received by all of the master terminal and the relay terminal, and then these terminals transfer the target frame to other terminals by performing the broadcast transmission again.

For example, as the number of relay terminals increases, the medium resources required to transmit a single broadcast frame also increase. Further, since modulation of the highest robust performance is applied to the broadcast frame, the communication rate is the lowest. Accordingly, a large amount of medium resources is spent in the multi-hop communication system due to multicast frame transmission.

Note that broadcast communication and multicast communication are different in a strict sense, but in the present specification, these are used almost synonymously.

In a case where a communication frame has a characteristic of "when frames of the same data are transmitted from a plurality of terminals, degradation in the carrier to interference and noise ratio (CINR) of reception signals due to interference between transmission signals of the plurality of terminals is equivalent to inter-symbol interference due to a group delay" (for example, a frame of HD-PLC), and in a case where the communication frame is a frame with high robustness such as in broadcast, it is possible to simultaneously transmit frames to a larger number of terminals by transmitting the frames while synchronizing the timing between the transmission terminals, as compared to a case where the frames are transmitted from a single terminal, and it is possible to shorten the medium occupation time.

Further, for example, in the case of the example illustrated in FIG. 1A, in a case where the broadcast frames are synchronously transmitted from terminal A 20A and terminal B 20B, reception frames has a CINR without errors and terminal C 20C can receive the broadcast frames even when a collision occurs.

Further, by synchronizing the time for all terminals in the system and scheduling the terminal and/or the transmission timing for appropriate transmissions, it is possible to reduce the number of transmissions and the medium occupation time.

In view of the above, a technology that makes it possible to appropriately perform broadcast transmission in a wired or wireless communication network will be described.

Hereinafter, embodiments of the present disclosure will be described in detail with appropriate reference to the drawings. However, more detailed description than necessary may be omitted. For example, detailed descriptions of well-known matters and redundant descriptions of substantially the same configuration may be omitted. This is to avoid unnecessary redundancy of the following description and to facilitate understanding by a person skilled in the art.

It is to be noted that the accompanying drawings and the following description are provided to enable those skilled in the art to fully understand this disclosure, and are not intended to limit the claimed subject.

(Embodiments)

<Configuration of Communication System>

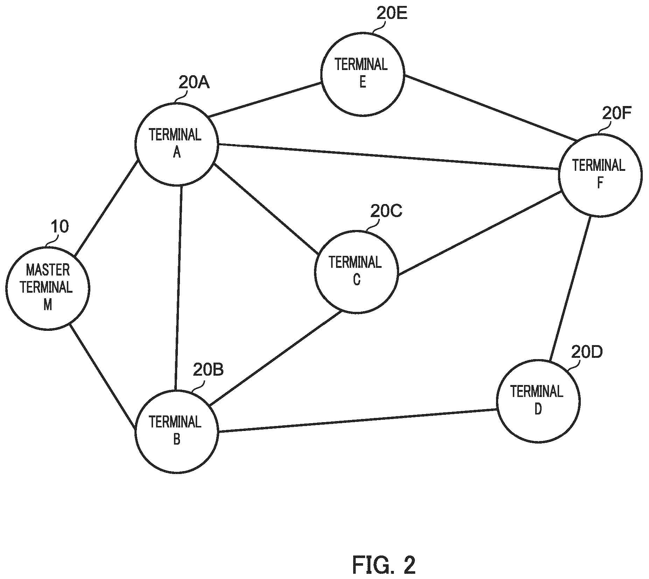

FIG. 2 illustrates an exemplary configuration of communication system 1 according to an embodiment of the present disclosure. Communication system 1 may be, for example, an HD-PLC system.

As illustrated in FIG. 2, communication system 1 includes master terminal M 10 and terminals A to F 20A to 20F (terminals A to E 20A to 20E: relay terminals, and terminal F 20F: end terminal). Note that the number of terminals constituting communication system 1 (communication network) and the connection form are not limited to those illustrated.

Communication system 1 may be disposed, for example, underwater (for example, in the sea). In a case where communication system 1 is disposed in this manner, for example, a control apparatus (not illustrated) may be connected to master terminal M 10, and electronic equipment (not illustrated) such as a sensor controlled by the control apparatus may be connected to each of terminals A to F 20A to 20F. Alternatively, communication system 1 may be used in a facility such as a factory or an office building, for example. In a case where communication system 1 is disposed as described above, the control apparatus (not illustrated) may be connected to master terminal M 10, and electronic equipment (not illustrated) such as a sensor, a lighting fixture, air conditioning apparatus, and the like controlled by the control apparatus may be connected to each of terminals A to F 20A to 20F. Note that, some of terminals A to F 20A to 20F do not need to have electronic equipment connected thereto, and terminals A to F 20A to 20F to which electronic equipment is not connected may function as repeaters.

Note that these master terminal M 10 and terminals A to F 20A to 20F may be collectively referred to as communication terminals or simply terminals 100, communication nodes or simply nodes 100, communication equipment or simply equipment 100, communication apparatuses or simply apparatuses 100, communication terminals or simply terminals 100, or the like. Further, the master terminal may be referred to as a base unit, a base terminal, a master, a root, a root terminal, or the like, and terminals A to F 20A to 20F may be referred to as slave units, slave terminals, terminals, or the like.

In communication system 1, each terminal 100 (each of master terminal M 10 and terminals A to F 20A to 20F) performs multi-hop communication using PLC that utilizes a power line as a communication line and superimposes a signal on the power line.

For example, in FIG. 1A, the hop counts of terminal A 20A and terminal B 20B (from master terminal M 10) are 1, the hop counts of terminal C 20C, terminal D 20D, and terminal E 20E (from master terminal M 10) are 2, and the hop count of terminal F 20F (from master terminal M 10) is 3. Note that, in the present embodiment, the maximum hop count is 10, and the maximum number of terminals connectable to communication system 1 is 1,024, but the maximum hop count and the maximum number of terminals are not limited to these values.

In communication system 1, master terminal M 10 collects predetermined information from terminals A to F 20A to 20F and performs remote monitoring or remote control on terminals A to F 20A to 20F. Here, communication is performed directly or indirectly between each of master terminal M 10 and terminals A to F 20A to 20F, and terminals A to F 20A to 20F that cannot directly communicate with master terminal M 10 perform communication with master terminal M 10 indirectly by sequentially relaying communication signals to other terminals A to F 20A to 20F that can directly communicate with master terminal M 10.

Each terminal 100 (each of master terminal M 10 and terminals A to F 20A to 20F) calculates a link cost indicating the communication quality (which may be referred to as link quality) with another terminal as described below, and performs communication with another terminal based on the link cost. For example, the unicast frame may be relayed (transferred) between master terminal M 10 and each of terminals A to F 20A to 20F through a route in which the medium cost between these terminals is the best (minimum). Further, the frame for synchronization may also be relayed between terminals based on the medium cost between the terminals.

Note that a communication method in communication system 1 is not limited to PLC, which is a wired communication method, and may be a wired communication method other than PLC or a wireless communication method as long as multi-hop communication is possible.

<Terminal Configuration>

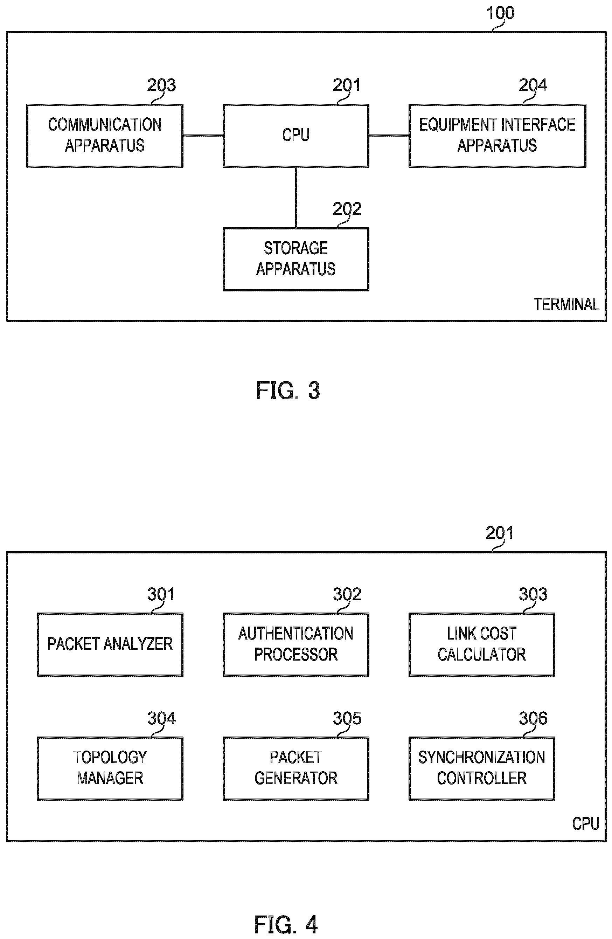

FIG. 3 illustrates an exemplary hardware configuration of terminal 100 according to the present embodiment.

As illustrated in FIG. 3, terminal 100 includes central processing unit (CPU) 201, storage apparatus 202, communication apparatus 203, and equipment interface apparatus 204. Terminal 100 may include components other than those described above.

CPU 201 controls the overall operation of terminal 100 (for example, processing by various components such as communication by communication apparatus 203). CPU 201 realizes various functions of terminal 100 (including the processing described later) by, for example, loading a predetermined program stored in an hard disk drive (HDD), a solid state drive (SSD), or the like included in storage apparatus 202 into a random access memory (RAM) or the like included in storage apparatus 202 and executing the program. The program executed by CPU 201 may be stored in advance in storage apparatus 202, or may be provided through an electrical communication line such as the Internet or stored in a non-transitory storage medium such as a memory card.

Storage apparatus 202 is a non-transitory storage medium, and includes a non-volatile memory such as an HDD, an SSD, or a read only memory (ROM), an electrically rewritable non-volatile memory such as an electrically erasable programmable read only memory (EEPROM), a volatile memory such as a RAM, and the like. Storage apparatus 202 stores information on a communication route, topology information, a communicable terminal (for example, another terminal which can be directly communicated), and the like (for example, in a table format). Storage apparatus 202 also stores programs such as control programs for operating terminal 100, data necessary for executing these programs, identification information of terminal 100, and other information/data processed by terminal 100 (for example, CPU 201).

In a case where terminal 100 is master terminal M 10, storage apparatus 202 stores, for example, a communication route data table for registering all communication routes between terminals constructed in the network, a topology table for recording information (link information) on adjacent terminals with which each terminal can directly communicate, and the like.

Further, in a case where terminal 100 is any of terminals A to F 20A to 20F, a communicable terminal data table or the like, which represents, for example, an adjacent terminal with which terminal 100 is capable of communicating, a communication cost value (link cost) indicating a communication quality between terminal 100 and the adjacent terminal, and a communication cost value (route cost) indicating a communication quality between terminal 100 and master terminal M 10 via the adjacent terminal is stored in storage apparatus 202.

Communication apparatus 203 is a communication interface apparatus for communicating with another terminal 100. Communication apparatus 203 may be a communication interface apparatus for PLC. Note that, when a wired communication method other than PLC or a wireless communication method is used as the communication method, communication apparatus 203 may be a communication interface apparatus corresponding to the wired communication method or the wireless communication method. Communication apparatus 203 is an example of a receiver and a transmitter according to the present disclosure.

Equipment interface apparatus 204 is an interface apparatus for exchanging (inputting and outputting) data with a control apparatus or electronic equipment connected to terminal 100. Equipment interface apparatus 204 may be, for example, a communication interface apparatus that conforms to the Ethernet (registered trademark) standard.

FIG. 4 illustrates an exemplary functional configuration of CPU 201 according to the present embodiment.

CPU 201 includes packet analyzer 301, authentication processor 302, link cost calculator 303, topology manager 304, packet generator 305, and synchronization controller 306.

A Hello packet (H packet) (also referred to as a hello message or hello signal), an authentication packet, a packet for synchronization, and a normal packet are inputted to CPU 201. The H packet is broadcast simultaneously from one terminal to another terminal being connected to the one terminal, prior to the authentication processing performed in communication system 1 (communication network). Further, in addition to the above, the H packet is periodically transmitted or broadcast to an adjacent terminal by each terminal to update the route information (such an H packet may be referred to as a periodic signal). The H packet may mean a packet that indicates the presence of the corresponding terminal. For example, the H packet includes identification information on the master terminal in the network, information on the transmission source of the H packet, information on the adjacent terminal to the corresponding terminal, information on the communication quality of the link, and the like. The authentication packet is a packet that is transmitted and received during the authentication processing, the packet for synchronization is a packet used for time synchronization, such as a Sync packet or a Follow Up packet, and the normal packet may be, for example, sensor data acquired by a sensor.

Packet analyzer 301 analyzes the data structure of various packets (H packet, authentication packet, packet for synchronization, and normal packet) that are inputted, determines the type of the packet, and distributes the transfer destination of the packet based on the determination result. Packet analyzer 301 outputs the H packet to link cost calculator 303 when, for example, the inputted packet is determined to be an H packet. Packet analyzer 301 outputs the authentication packet to authentication processor 302 when, for example, the input packet is determined to be an authentication packet. Packet analyzer 301 outputs the normal packet to topology manager 304 when, for example, the input packet is determined to be the normal packet. Packet analyzer 301 outputs the packet for synchronization to synchronization controller 306 when, for example, the input packet is determined to be the packet for synchronization.

Authentication processor 302 executes an authentication processing with a terminal, which is a transmission source of the authentication packet, using the authentication packet inputted from packet analyzer 301. Authentication processor 302 outputs an authentication packet, which is a packet generated during the authentication processing, or a response to an authentication packet transmitted from another terminal, to topology manager 304.

Link cost calculator 303 calculates a link cost indicating the reception quality of an H packet received by the terminal from a transmission source terminal using the H packet inputted from packet analyzer 301. Link cost calculator 303 writes (stores) a calculation result of the link cost into the data structure of the H packet. Further, the H packet stores the value of each link cost in a case where the H packet is transmitted from master terminal M 10. Link cost calculator 303 outputs the H packet storing the calculation result of the link cost to topology manager 304.

Topology manager 304 manages (acquires) topology information indicating the topology (that is, the terminals constituting communication system 1 and their connection forms) generated by master terminal M 10, and assigns and outputs the output destinations (for example, packet generator 305) of various packets based on the topology information. The topology information is stored in topology manager 304 or storage apparatus 202 of each terminal. Further, topology manager 304 stores not only the topology information but also information on the communication route described above, a terminal capable of communication (for example, another terminal capable of direct communication), the terminal itself, and the like in topology manager 304 or storage apparatus 202. Note that, topology manager 304 of master terminal M 10 generates (forms) a topology based on each link cost calculated by link cost calculator 303 of master terminal M 10 in accordance with the H packet transmitted from each of one or more terminals that are the target of the authentication processing, and provides topology information indicating the topology to other terminals.

Packet generator 305 generates and outputs a packet for data communication, an H packet, and the like for another terminal to which the packets are to be transmitted, based on the authentication packet or the normal packet inputted from topology manager 304.

Synchronization controller 306 performs control related to time synchronization in communication system 1. Synchronization controller 306 performs such control in accordance with, for example, IEEE 1588 (PTP Ver2), which is a standard for time synchronization with nanosecond accuracy in a network with a tree structure.

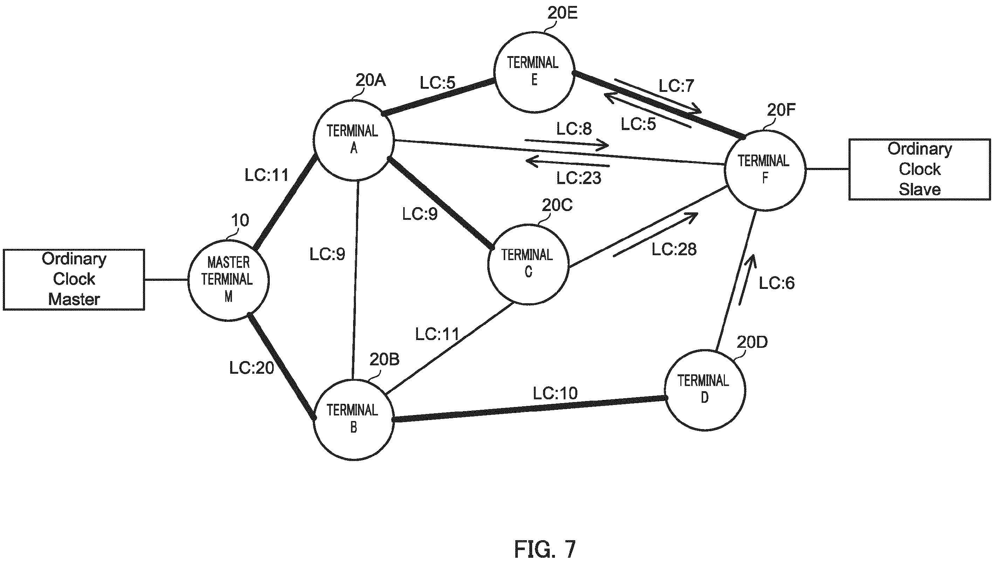

IEEE 1588 is a standard for specifications allowing precise transfer of highly accurate time information from a master clock to a client clock via an asynchronous packet network. Note that, in IEEE 1588, it is possible to synchronize an OC Clock with an OC Master Clock by connecting an Ordinary Clock Master (OC Master), which is a clock source of a system, and an Ordinary Clock Slave (OC Slave), which holds a clock to be synchronized with the OC Master, to an End to End Transparent Clock node (E2E TC) or a Peer to Peer Transparent Clock node (P2P TC), which is a relay node, via a network such as Ethernet. For example, in the present embodiment, as illustrated in FIG. 7, communication system 1 may be connected between the OC Master and OC Slave.

In the present embodiment, a P2P TC is used, which measures a transmission path delay (also referred to as transmission delay) between terminals in advance using a $P_{delay\_Req}$ frame, a $P_{delay\_Resp}$ frame, and a $P_{delay\_Resp\_Follow\_Up}$ frame, and performs clock error correction by adding the delay information when transferring a Sync frame. This is because, once the transmission delay of the adjacent link is measured, there is no need to measure it again in a case where the transmission delay does not change, and clock correction is possible with only one-way transfer of a Sync packet and a Follow Up packet, which is advantageous for a communication medium sharing type PLC. Of course, E2E TC may be used.

Note that, in the following, the term "frame" may be appropriately replaced with terms such as "packet", "message," "signal," and the like.

Synchronization controller 306 generates these $P_{delay\_Req}$ frames, $P_{delay\_Resp}$ frames, Sync frames, Follow Up frames, and frames described below, and transmits them to a communication counterpart terminal. Alternatively, synchronization controller 306 may cause packet generator 305 to generate such a frame and transmit it to the communication counterpart terminal.

Synchronization controller 306 performs transmission path delay measurement and time stamp acquisition, which will be described below, for time synchronization.

Synchronization controller 306 performs clock adjustment of the corresponding terminal based on information on the measured transmission path delay and the like.

For example, synchronization controller 306 of the relay terminal synchronizes the timing at which another relay terminal in communication system 1 (for example, another relay terminal located at the same hop as the relay terminal in communication system 1) transmits a frame by broadcast and the timing at which the relay terminal transmits a frame by broadcast.

Synchronization controller 306 is an example of a synchronization controller or a (broadcast) transmission controller according to the present disclosure.

<Operation of Communication System>

Hereinafter, an operation related to broadcast synchronization transmission in communication system 1 will be described.

[Synchronization Based on IEEE 1588]

- Relaying of Sync Frame

TCs include a One-Step TC, which can embed a time stamp of a Sync point in a transmission frame in hardware when a Sync frame is transmitted, and a Two-Step TC, which cannot do so. In the present embodiment, the Two-Step TC is used, but the One-Step TC may also be used.

A Sync message generated by an upstream Ordinary Clock Master arrives at the TC slave port. The Sync message includes a One-Step Sync message in which the transmission time is embedded in the Sync message, and a Two-Step Sync message in which the transmission time is not embedded in the Sync message and which is followed by a Follow Up message including the transmission time information and transmitted after the Sync message.

When the One-Step Sync message arrives at a terminal supporting the Two-Step TC, synchronization controller 306 of the terminal first modifies only twoStepFlag in the Sync message to True and transmits the Sync message to the downstream terminal as quickly as possible. At this time, synchronization controller 306 records the Sync message arrival time (dt1) and the Sync transmission time (dt2) (for example, in a synchronization information storage area of storage apparatus 202). Next, as described in 11.5.2.2 of IEEE 1588-2008, synchronization controller 306 generates a Follow Up message from the information in the Sync message, stores in the Collection Field (CF) a value obtained by adding the residence time (= dt2 - dt1) to the transmission path delay (peerMeanPathDelay) between a terminal that transmitted the Sync message and the current terminal to which the synchronization controller belongs, and transmits the Follow Up message to the downstream terminal. Note that the measurement of the transmission path delay (peerMeanPathDelay) will be described later.

In a case where the Two-Step Sync message arrives at a terminal supporting Two-Step TC, synchronization controller 306 of the terminal transmits the Sync message as it is to a downstream terminal as soon as possible. At this time, synchronization controller 306 records the Sync message arrival time (dt1) and the Sync transmission time (dt2) (for example, in the synchronization information storage area of storage apparatus 202). Next, when a Follow Up message arrives at this terminal, synchronization controller 306 of the terminal stores in the Collection Field (CF) a value obtained by adding the residence time (= dt2 - dt1) to the transmission path delay (peerMeanPathDelay) between a terminal that transmitted the Sync message and the current terminal to which the synchronization controller belongs, and transmits the Follow Up message to the downstream terminal.

- Measurement of transmission path delay (peerMeanPathDelay)

As described above, the P2P TC relay apparatus (terminal) needs to store in CF and transmit the value obtained using the transmission path delay (peerMeanPathDelay) between this terminal and the transmission source terminal of the Sync message when relaying the Sync message. Therefore, the transmission path delay is measured at the time when the Sync message transmission terminal is identified. For the transmission path delay measurement, the $P_{delay\_Req}$ frame, $P_{delay\_Resp}$ frame, and $P_{delay\_Resp\_Follow\_Up}$ frame are used. A terminal that wants to know the transmission path delay is called a Requester, and a terminal that is the counterpart of the Requester is called a Responder.

(Synchronization controller 306 of) the Requester transmits the $P_{delay\_Req}$ frame to Responder and records the transmission time as t1 (for example, in the synchronization information storage area of storage apparatus 202).

(Synchronization controller 306 of) the Responder records the time at which the $P_{delay\_Req}$ frame is received as t2 (for example, in the synchronization information storage area of storage apparatus 202). Subsequently, (synchronization controller 306 of) the Responder generates the $P_{delay\_Resp}$ frame, transmits it to the Requester, and records the transmission time as t3 (for example, in the synchronization information storage area of storage apparatus 202). (Synchronization controller 306 of) the Requester records the time at which the $P_{delay\_Resp}$ frame is received as t4 (for example, in the synchronization information storage area of storage apparatus 202).

Subsequently, (synchronization controller 306 of) the Responder stores D2 = t3 - t2 in the $P_{delay\_Resp\_Follow\_Up}$ frame and transmits it to the Requester. Thus, (synchronization controller 306 of) the Requester can determine the transmission path delay as peerMeanPathDelay = {(t4 - t1) - (t3 - t2)}/2.

The number of times the transmission path delay measurement is performed may be basically once at the time of the start of Sync message transmission and at the time of the change of the Sync message transmission source.

- Time stamp acquisition

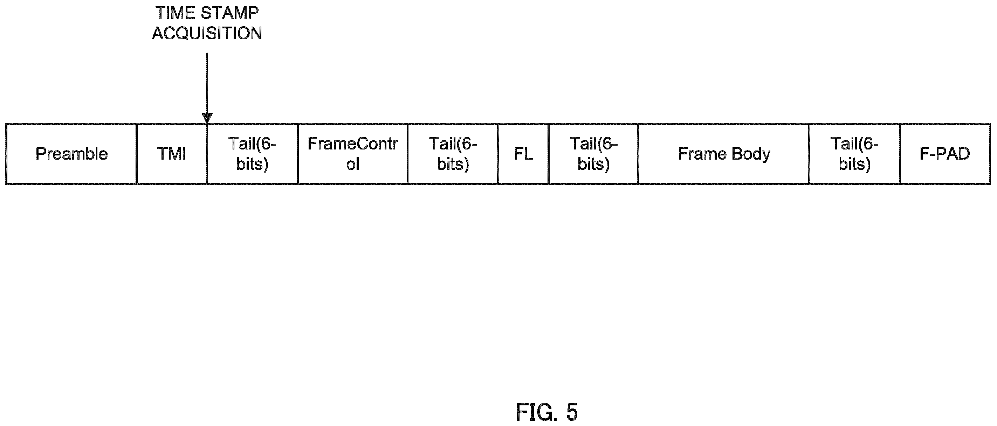

In Ethernet equipment that implements IEEE 1588, the time at which the leading end of the MAC header of a packet crosses a boundary between the equipment and a line is acquired as a time stamp. In the present embodiment, when the leading end of "Tail" immediately following "Tone Map Index (TMI)" indicated by the arrow in FIG. 5 crosses the boundary between the own terminal and the line, synchronization controller 306 indicates a trigger signal to the timer of the own terminal and collects (acquires) the time as a time stamp.

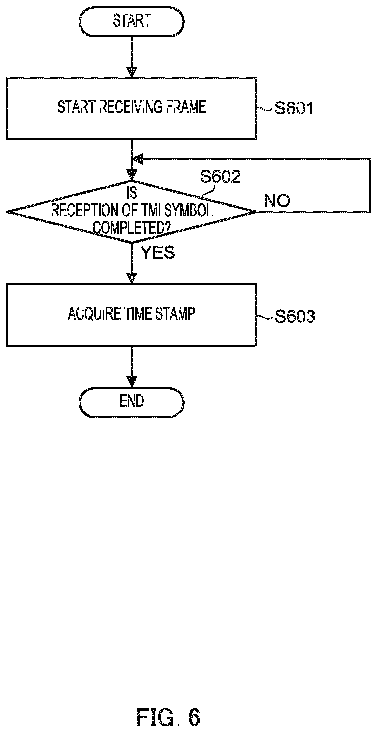

FIG. 6 is a flowchart illustrating an example of time stamp acquisition at the time of frame reception.

In step S601, the terminal (for example, Responder) starts receiving the frame.

In step S602, synchronization controller 306 of the terminal determines whether the reception of the TMI symbol is completed in the frame.

In a case where the reception of the TMI symbol is not completed in the frame (step S602; NO), the flow returns to step S602.

In a case where the reception of the TMI symbol is completed in the frame (step S602; YES), synchronization controller 306 of the terminal acquires a time stamp in step S603.

Note that, for the time stamp acquisition at the time of frame transmission (for example, at the time of frame transmission by the Requester), the above "reception" may be replaced with "transmission."

The time stamps acquired as described above are recorded as the above-described times (for example, t1 to t4).

In the present embodiment, a Sync packet or the like (that is, a broadcast packet) is relayed based on relay path information (information called, for example, so-called route information, which is collected to create a multi-hop topology and which is similar to that illustrated in FIGS. 1A and 1B,) of a unicast packet. For example, in the example illustrated in FIG. 7, the route information for broadcasting, indicated by thick lines, is formed based on communication cost evaluation results between terminals the same as shown in FIG. 1A and FIG. 1B. Thus, the transfer count for all path relays can be reduced to four times. Further, no loop is generated. Note that, after all terminals are synchronized, the transfer count is reduced to three times.

In this manner, it is possible to prevent or suppress the occurrence of an infinite loop in which Sync packets are relayed in all directions or the occurrence of unnecessary Sync packet relaying in a communication system in which a plurality of relay routes may exist from the master terminal to the end terminal.

In the present embodiment, each terminal holds the following information in topology manager 304 or storage apparatus 202:

☐ whether the terminal is a relay terminal or not;
☐ one upstream relay terminal that receives a packet from the master terminal (note that, the number of upstream relay terminals is always one) (part of the route information); and
☐ downstream terminal(s) (0 to n terminals) that relays a packet from the master terminal (part of the route information).

By using the above information, it is possible to construct a Sync packet relay route in which a relay source of each path serves as a virtual TC master port and a relay destination serves as a virtual TC slave port.

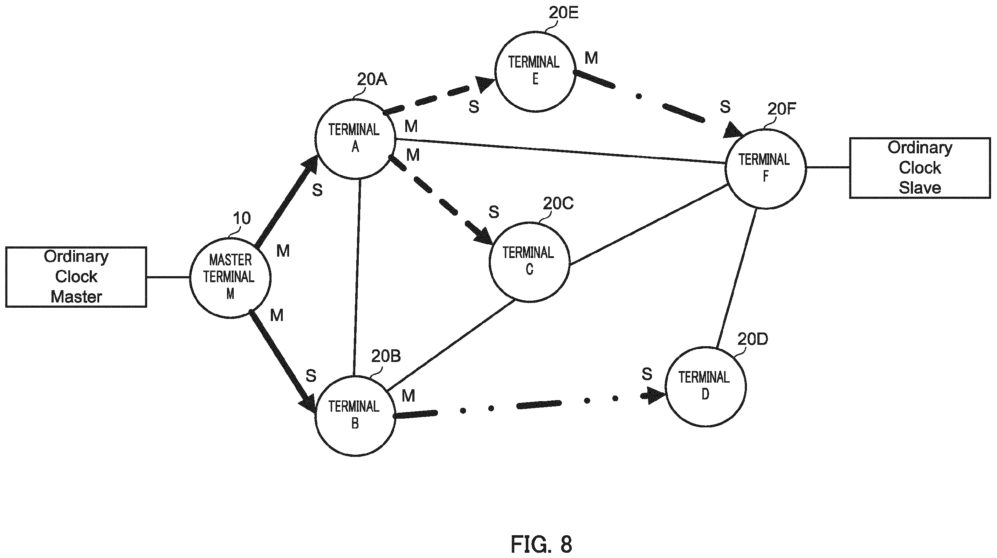

FIG. 8 illustrates virtual TC master ports and virtual TC slave ports of paths in the example illustrated in FIG. 7. Note that, in the figure, M represents a virtual TC master port, and S represents a virtual TC slave port.

As described above, by utilizing the multi-hop system information, it is possible to efficiently configure an IEEE 1588 topology on the system. In the illustrated example, since the Sync packet transmitted from the TC master port is a multicast packet, the number of Sync packets in one synchronization is four (from master terminal M 10 to terminal A 20A and terminal B 20B, from terminal A 20A to terminal C 20C and terminal E 20E, from terminal B 20B to terminal D 20D, and from terminal E 20E to terminal F 20F).

Note that, in the present embodiment, there is a possibility that a frame from a terminal other than an immediately upstream terminal of the current terminal also arrives, and thus, the TC slave (port) performs the following:

☐ acquiring upstream terminal information and discarding Sync frames and Follow Up frames from transmission sources other than the immediately upstream terminal;
☐ transmitting the $P_{delay\_Req}$ frame to the upstream terminal using a unicast frame.
☐ receiving only a unicast $P_{delay\_Req}$ frame, swapping the transmission source (source) address and the transmission destination (destination) address, and transmitting a $P_{delay\_Resp}$ frame and a $P_{delay\_Resp\_Follow\_Up}$ frame by unicast in a case where the current terminal is a relay terminal or a master terminal and receives a $P_{delay\_Req}$ frame; and
☐ receiving only a unicast $P_{delay\_Resp}$ frame and a unicast $P_{delay\_Resp\_Follow\_Up}$ frame, and discarding a multicast $P_{delay\_Resp}$ frame and a multicast $P_{delay\_Resp\_Follow\_Up}$ frame in a case of receiving a $P_{delay\_Resp}$ frame and a $P_{delay\_Resp\_Follow\_Up}$ frame.

Further, in the present embodiment, in order to prevent Sync packet relay through a path unrelated to the terminal, the TC master (port) performs the following:

☐ not transmitting Sync packets and similar packets in the initial state;
☐ bridging Announce in accordance with normal PLC frame rules;
☐ transmitting a $P_{delay\_Req}$ frame in a case where an upstream terminal is present when a terminal that has recognized Announce confirms whether an upstream terminal is present;
☐ bridging the Sync frame and the Follow Up frame (the bridging is continued unless the network is reconfigured) when the number of downstream terminals is confirmed by the terminal in a case where the $P_{delay\_Resp}$ frame and the $P_{delay\_Resp\_Follow\_Up}$ frame are successfully received, and when one or more downstream terminals are present; and
☐ returning to the initial state in a case where the network is reconfigured (the topology is changed).

Thus, it is possible to construct a plurality of virtual communication paths even in PLC (for example, HD-PLC) that uses one communication medium.

- Global clock function

The IEEE 1588-compatible terminal does not need to align, with a global time, the time of a timer included in the terminal (also referred to as a self-terminal timer or a self-timer), but it is also possible to align the self-timer with the global time by using a Sync packet to be relayed or transmission delay information acquired as a TC function.

To this end, each terminal sniffs the Two-Step Sync message and the Follow Up message to perform time adjustment of the timer and clock period correction of the terminal. Further, optionally, the master terminal may be capable of generating a Two-Step Sync message and a Follow Up message, allowing synchronization even in the absence of an Ordinary Clock Master.

- Timer time adjustment

An IEEE 1588-compliant terminal having a TC function includes, as described above, transmission path delay information (peerMeanPathDelay) (pt1), a Two-Step Sync message reception time (dt1), a Collection Field (CF1) in the Two-Step Sync message, a Two-Step Sync message transmission time (t1) in a Follow Up message, and a Collection Field (CF2) in the Follow Up message.

When the Two-Step Sync message reception time in the Ordinary Master Clock is defined as tx, tx = t1 + CF1 + CF2 + pt1. Thus, correction value g for the self-terminal clock (self-clock) with respect to the Ordinary Master Clock can be calculated as follows:

$$g = t1 + CF1 + CF2 + pt1 - dt1.$$

Based on the above delay information and time information, the clock in the terminal is aligned (corrected) with the Ordinary Master Clock. Note that, in the present embodiment (for example, HD-PLC), a method of sharing a medium throughout the entire system is used, and thus, it is desirable to minimize the number of packets required for correction.

The correction includes two types of correction of time correction and clock period correction.

For the time correction, after receiving the Sync packet and the corresponding Follow Up packet and performing the transfer process of the packets, synchronization controller 306 controls the time of the self-timer to be shifted by correction value g.

For the clock period correction, synchronization controller 306 determines error variation amount $d_t = g_t - g_0$ from correction value $g_0$ of the time and correction value gt after correction evaluation time At has elapsed, and controls clock period T to be corrected to $T \cdot (1 + \alpha \cdot d_t/A_t)$.

For example, in a case where the performance of a clock oscillator is 50 ppm, the self-clock can be synchronized with the Ordinary Master Clock with an accuracy of 100 nanoseconds after a correction period of 30 seconds by letting the Sync period be 15 seconds, At (error variation amount measurement time) be 15 seconds, and α (clock synchronization correction coefficient) be 2.1600499167 (1000000000 × 4.638671875 × 2/4294967296).

[Exemplary General Operation of Broadcast Synchronization Transmission]

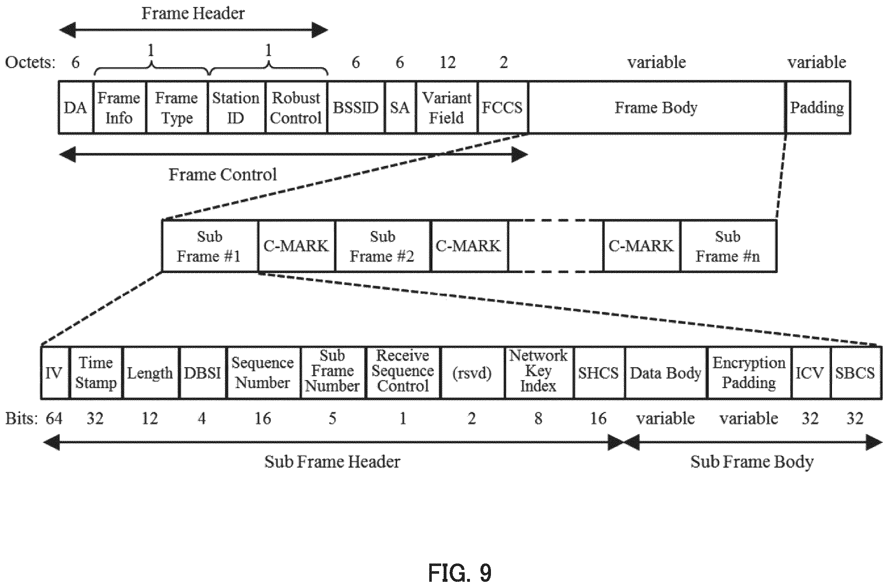

By applying IEEE 1588 as described above, it is assumed that clock synchronization for all terminals in communication system 1 is established, and an example of an operation procedure for improving the efficiency of transmitting broadcast frames to a plurality of terminals simultaneously (synchronously) in a state where clock synchronization is established will be described. In the following description, the frame format of IEEE 1901-2020, to which HD-PLC conforms, will be described as an example of a communication frame. Note that the communication frame format of IEEE 1901-2020 defines the same communication frame format as in FIG. 7.38 (FCW MPDU frame format) of Telecommunication Technology Committee (TTC) standard JJ-300.20v2. FIG. 9 illustrates an example of a communication frame format according to an embodiment of the present disclosure, which is a communication frame format illustrated in FIG. 7.38 of TTC standard **JJ-300.20v2** (Figures 6 to 17 of IEEE 1901-2020).

As a constraint for utilizing simultaneous broadcast frame transmission, the transmission data of the frames to be transmitted simultaneously needs to be the same. For this reason, the transmission (communication) frame format may have the following configuration:

　　☐ the transmission destination address (Destination Address (DA) shown in FIG. 9) in the frame is fixed to a broadcast address (FF-FF-FF-FF-FF-FF) or a specific multicast address (01-00-5E-XX-XX-XX) (XX-XX-XX is an arbitrary value defined by the system);
　　☐ the transmission source address (Source Address (SA) illustrated in FIG. 9) in the frame is the address (first transmission source address) of the terminal that first transmits the broadcast frame (hereinafter, referred to as the initial transmission terminal) (not the address of the relay terminal); and
　　☐ the initialization vector (Initialization Vector (IV) illustrated in FIG. 9) in the frame is generated by the initial transmission terminal and is the same (copied) in all relay frames.

Note that, IV may be used as a seed for encrypting a frame. For example, in a case where the master terminal performs broadcast communication, the broadcast frames generated by each relay terminal become identical by notifying the relay terminal of the IV generated by the master terminal. As a result, the frames transmitted simultaneously from the relay terminals are identical, so even in a case where a collision occurs, other terminals can still receive the frames.

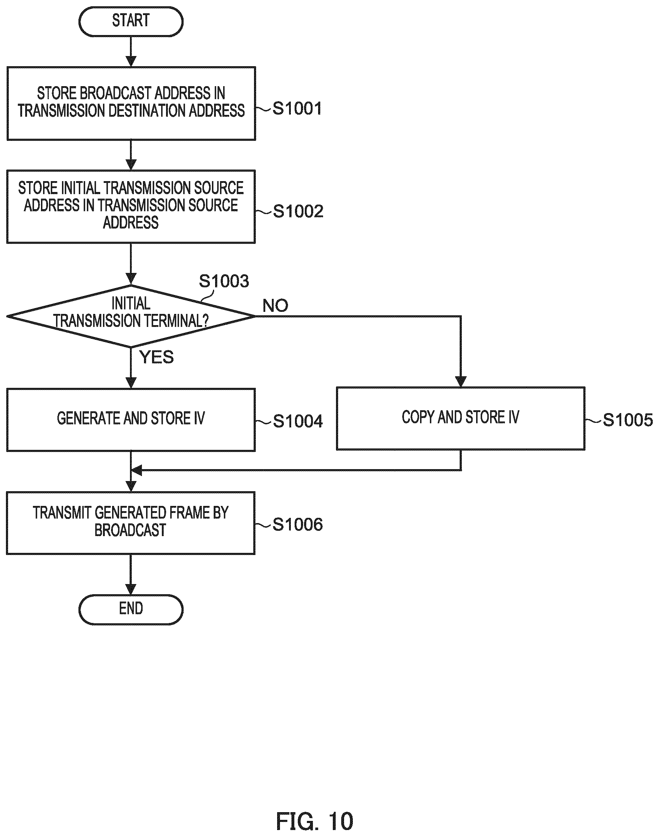

FIG. 10 is a flowchart illustrating a general exemplary operation of broadcast frame synchronization transmission. Note that, other fields in the frame other than those described below in the fields are assumed to be configured (stored) with appropriate values as needed.

In step S1001, synchronization controller 306 of the terminal stores a broadcast address (FF-FF-FF-FF-FF-FF) or a specific multicast address (01-00-5E-XX-XX-XX) in the transmission destination address of the frame.

In step S1002, synchronization controller 306 of the terminal stores the address of the initial transmission terminal in the transmission source address of the frame.

In step S1003, synchronization controller 306 of the terminal determines whether this terminal is the initial transmission terminal.

In a case where the terminal is the initial transmission terminal (step S1003; YES), synchronization controller 306 of the terminal generates an IV and stores it in the frame in step S1004.

In a case where the terminal is not the initial transmission terminal (step S1003; NO), in step S1005, synchronization controller 306 of the terminal copies the IV from the received (broadcast) frame and stores the IV in the frame.

In step S1006, synchronization controller 306 of the terminal transmits by broadcast the frame generated by storing the information as described above.

[Exemplary Operation Procedure 1 of Broadcast Synchronization Transmission]

In present Exemplary Operation Procedure 1, first, the initial transmission terminal acquires the transmission right through backoff or the like and transmits the first broadcast frame. For example, the initial transmission terminal is assumed to be master terminal M 10 illustrated in FIG. 2.

Next, relay terminals (for example, terminal A 20A and terminal B 20B illustrated in FIG. 2) that have received the broadcast frame transmitted by master terminal M 10 add the interval time calculated from the frame length to the reception start time, and relay and transmit the broadcast frame at the time of the addition result. Note that, even in a case where the relay terminals receive a frame that has been relayed once from another terminal, the relay terminals do not perform retransmission.

Hereinafter, the same operation is repeated. That is, a relay terminal that has received the broadcast frame transmitted by the relay terminals performs the transmission of the broadcast frame as described above.

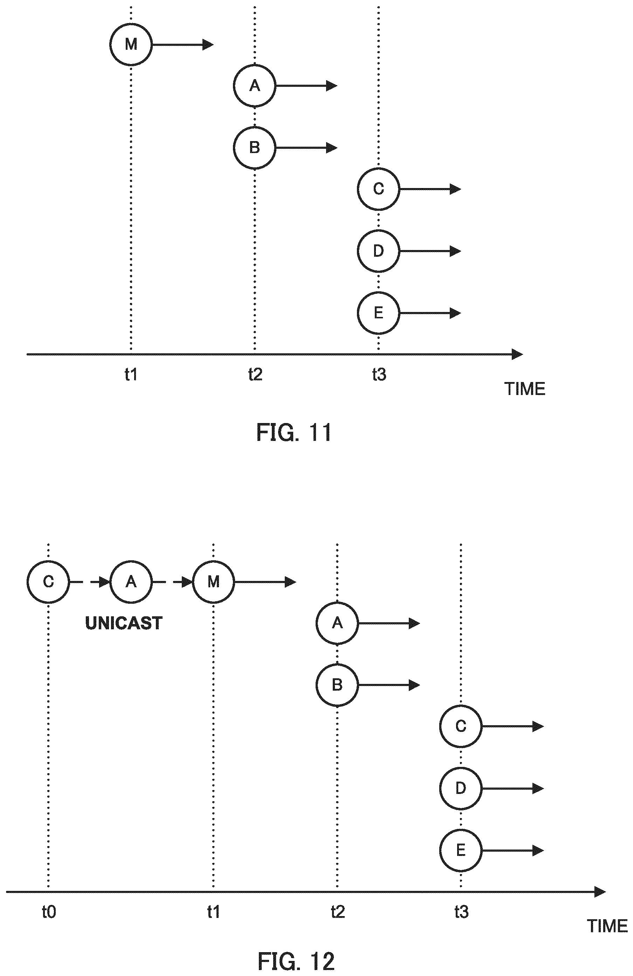

As described above, according to Exemplary Operation Procedure 1, by synchronously transmitting the broadcast frame from terminals (for example, terminal A20A and terminal B 20B) located at positions of the same hop count from the initial transmission terminal (for example, master terminal M 10), it is possible to reduce the medium occupation time caused by broadcast transmission. For example, in the example shown in FIG. 2, as illustrated in FIG. 11, the broadcast transmission can be completed in three times, thereby reducing the medium occupation time. Further, by synchronously transmitting the broadcast frame, collision occurrence is reduced or prevented, and, for example, terminal C 20C illustrated in FIG. 2 is more likely to be able to receive the broadcast frame. Further, by synchronization in accordance with IEEE 1588 as described above, it is possible to achieve synchronization with high precision.

[Exemplary Operation Procedure 2 of Broadcast Synchronization Transmission]

In present Exemplary Operation Procedure 2, the following is added to the above Exemplary Operation Procedure 1.

The initial transmission terminal is set to be the master terminal. Accordingly, in a case where a terminal other than the master terminal desires to transmit a broadcast frame, the terminal (for example, terminal C 20C) converts the broadcast frame into a unicast frame addressed to the master terminal (master terminal M 10) and transmits the unicast frame to the master terminal (for example, via terminal A 20A). This is illustrated in time interval [t0, t1] in FIG. 12. Note that the unicast frame transmitted from the terminal to the master terminal may include information (for example, a flag) indicating that a broadcast frame is to be transmitted (from the master terminal).

Next, the master terminal that has received the unicast frame transmits the unicast frame by returning (converting) it into a broadcast frame. This is illustrated in the time interval [t1, t3] in FIG. 12 (similar to Exemplary Operation Procedure 1).

Then, the master terminal calculates the maximum relay count from the topology information and does not transmit the next frame until the time required for the relay to be completed has elapsed.

As described above, according to Exemplary Operation Procedure 2, it is possible to completely avoid the collision of different broadcast frames. For example, it is possible to avoid a situation in which a collision occurs when a plurality of terminals in a hidden terminal state, which are unable to grasp each other's communication states, start broadcast transmission at a timing at which communications overlap one another, and the collided frames are lost without recovery.

[Exemplary Operation Procedure 3 of Broadcast Synchronization Transmission]

In present Exemplary Operation Procedure 3, a broadcast-dedicated transmission period is periodically configured. Note that, when applying present Exemplary Operation Procedure 3, at least a part of above Exemplary Operation Procedure 1 or 2 is applied.

More specifically, in a specific condition of the current time in the system (that is, in a time that satisfies the specific condition (broadcast-dedicated transmission period)), transmission is basically suppressed (at least, unicast transmission is not performed), and the master terminal and the relay terminals transmit a broadcast frame in the specific condition of the current time.

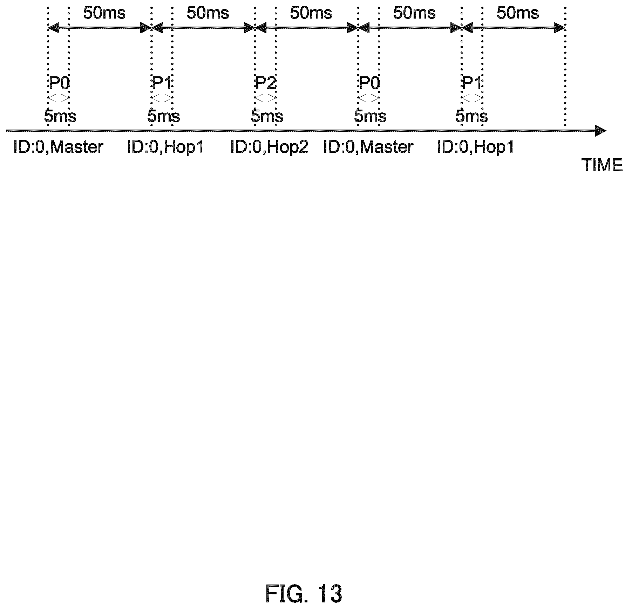

An example of such transmission control will be described with reference to FIG. 13.

In the present example, a broadcast transmission period of 5 milliseconds is set in a cycle of 50 milliseconds.

A period in which the value representing the current time in milliseconds is defined as $\beta$ and transmission is basically suppressed in a period when $0 \le \beta \bmod 50 \le 5$.

ID: 0 is assigned to the master terminal, ID: N is assigned to the relay terminal at the N-th hop (N-th stage), and the terminal to which the ID is assigned transmits a broadcast frame during a period in which $\mathrm{floor}(\beta/50) \bmod (M+1) = \mathrm{ID}$ (where the maximum value of N is M). Note that N represents the hop count of the relay terminal (the master terminal and the end terminal are not included in the hop count).

FIG. 13 illustrates an example of broadcast frame transmission in broadcast-dedicated periods in a case where M = 2 (for example, a three-hop multi-hop system as illustrated in FIG. 1A).

As illustrated in FIG. 13, the master terminal performs broadcast transmission in broadcast transmission period P0, the relay terminal in the first hop performs broadcast transmission in broadcast transmission period P1, and the relay terminal in the second hop performs broadcast transmission in broadcast transmission period P2.

In the above, an example in which ID: 0 is assigned to the master terminal has been described, but the present disclosure is not limited to this example. ID: 0 may be assigned to the initial transmission terminal, and ID: K may be assigned to the terminal present in the K-th hop from the initial transmission terminal.

As described above, according to Exemplary Operation Procedure 3, it is possible to avoid a collision between a broadcast frame and a unicast frame. For example, it is possible to avoid a situation in which a collision occurs when one terminal starts broadcast frame transmission and another terminal starts unicast frame transmission, resulting in the loss of the collided broadcast frame.

[Exemplary Operation Procedure 4 of Broadcast Synchronization Transmission]

In present Exemplary Operation Procedure 4, the broadcast-dedicated transmission period is configured periodically in the same manner as in above-described Exemplary Operation Procedure 3, but the condition related to the broadcast frame transmission terminal is changed. Note that, when applying present Exemplary Operation Procedure 4, at least a part of above Exemplary Operation Procedures 1, 2, or 3 is applied.

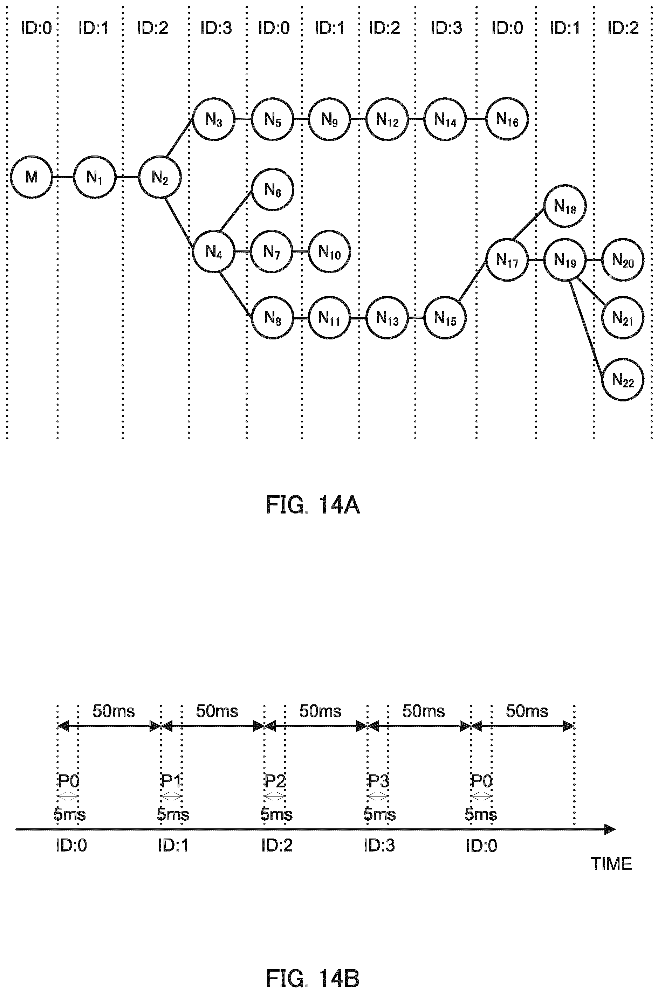

An example of such transmission control will be described with reference to FIGS. 14A and 14B.

In the present example, a broadcast transmission period of 5 milliseconds is configured in a cycle of 50 milliseconds.

A period in which the value representing the current time in milliseconds is defined as $\beta$ and transmission is basically suppressed in a period when $0 \leq \beta \bmod 50 \leq 5$.

As illustrated in FIG. 14A, ID:0 is assigned to the master terminal, and ID:N mod k is assigned to the relay terminal in the N-th hop (N-th stage). Then, in a period in which floor$(\beta/50) \bmod (L+1) = $ ID (where the maximum value of N mod k is L), the terminal to which the ID is assigned transmits a broadcast frame. Note that N represents the hop count of the relay terminal (the master terminal is not included in the hop count).

FIG. 14B illustrates an example of broadcast frame transmission in the broadcast-dedicated periods in a case where N = 10 and k = 4.

As illustrated in FIG. 14B, the master terminal to which ID: 0 is assigned and the relay terminals in the fourth hop and the eighth hop perform broadcast transmission in broadcast transmission period P0, the relay terminals in the first hop, the fifth hop, and the ninth hop to which ID: 1 is assigned perform broadcast transmission in broadcast transmission period P1, the relay terminals in the second hop, the sixth hop, and the tenth hop to which ID: 2 is assigned perform broadcast transmission in broadcast transmission period P2, and the relay terminals in the third hop and the seventh hop to which ID: 3 is assigned perform broadcast transmission in broadcast transmission period P3.

Here, terminal $N_2$ will be considered. When master terminal M continuously transmits broadcast frames, terminal $N_1$ and terminals $N_9$, $N_{10}$, and $N_{11}$ transmit different broadcast frames simultaneously (synchronously) at a certain time. However, the communication between terminal $N_1$ and terminal $N_2$ is one hop, while the communication between terminal $N_2$ and terminals $N_9$, $N_{10}$, and $N_{11}$ is three hops. Accordingly, the broadcast frame of terminal $N_1$ does not affect the broadcast frames of terminals $N_9$, $N_{10}$, and $N_{11}$ that are transmitted simultaneously, and vice versa.

Accordingly, different broadcast frames may be simultaneously transmitted between terminals to which the same ID is assigned and which are at different hop counts, but this does not result in a reception error. This is because, due to the nature of multi-hop topology formation, the transmission wave is always attenuated when terminals are away from each other by a certain relay hop count or more. Thus, the relay time can be set to L/M, and the throughput can be increased by M/L times.

Note that k may be set to a sufficiently large value according to an empirical rule, may be calculated and set based on the current attenuation state between terminals (CINR value between terminals, PHY rate, and the like) by the master terminal, or may be set by another method.

As described above, according to Exemplary Operation Procedure 4, it is possible to avoid a collision between a broadcast frame and a unicast frame, and to prevent the time required for relaying the broadcast frame from increasing and the throughput from decreasing when the relay hop count increases.

The above Exemplary Operation Procedures 1 to 4 may be switched according to the application. Further, it is not necessary to implement all of above Exemplary Operation Procedures 1 to 4 in the terminal.

For example, in a case where a protocol of an application defines that the medium occupation time by communication is extremely small and terminals do not generate communication packets at the same time, Exemplary Operation Procedure 1 may be used or only Exemplary Operation Procedure 1 may be implemented. Further, in an application in which only the master terminal transmits a broadcast frame, Exemplary Operation Procedure 1 may be used, or only Exemplary Operation Procedure 1 may be implemented.

<Effect in Embodiment>

A relay terminal (for example, terminal A 20A) according to the present embodiment is a relay communication apparatus in communication system 1 in which multi-hop communication is performed. Communication apparatus 203 of the relay terminal receives a frame transmitted by broadcast from a first terminal (for example, master terminal M 10) in communication system 1 and transmits the frame by broadcast. Synchronization controller 306 of the relay terminal synchronizes the timing at which a third terminal (for example, terminal B 20B) in communication system 1, which has received the frame transmitted by broadcast from the first terminal, transmits the frame by broadcast with the timing at which communication apparatus 203 of the relay terminal transmits the frame by broadcast. According to the present embodiment, it is possible to shorten the medium occupation time by synchronizing the timings between the relay terminal (for example, terminal A 20A) and the second terminal (for example, terminal B 20B) and transmitting the frame by broadcast. Further, according to the present embodiment, since the broadcast frames are synchronously transmitted from the relay terminal and the second terminal, the possibility of a collision occurrence is reduced or prevented, and the third terminal (for example, terminal C 20C) in communication system 1 is more likely to be able to receive the broadcast frame. Thus, it is possible to appropriately perform broadcast transmission in a communication network.

<Variation>

The synchronization may be performed between a plurality of terminals using a synchronization signal from a GPS/GNSS receiver using a satellite as the synchronization controller.

Further, in the above-described embodiment, the functional sections of CPU 201 may be integrated with one another as appropriate, or may be divided into two or more subfunctional sections.

Further, in the above-described embodiments, the order of the steps illustrated in the flowcharts and the like is not limited to the order illustrated.

<Summary of Embodiments>

A relay communication apparatus according to one exemplary embodiment of the present disclosure includes: a receiver that receives a first signal transmitted by broadcast from a first communication apparatus; a transmitter that transmits the first signal by broadcast; and a synchronization controller that synchronizes a timing at which a second communication apparatus receiving the first signal transmitted by broadcast from the first communication apparatus transmits the first signal by broadcast and a timing at which the transmitter transmits the first signal by broadcast.

**In** the present relay communication apparatus, the transmitter transmits by unicast a second signal to a master communication apparatus in a communication system including the relay communication apparatus, the first communication apparatus, and the second communication apparatus, the second signal including information indicating that the first signal is to be transmitted by broadcast, and the receiver receives the first signal converted for broadcast transmission from the second signal by the master communication apparatus.

In the present relay communication apparatus, the synchronization controller synchronizes, with a period dedicated to broadcast transmission, the timing at which the second communication apparatus transmits the first signal by broadcast and the timing at which the transmitter transmits the first signal by broadcast.

In the present relay communication apparatus, a hop count from the first communication apparatus to the relay communication apparatus and a hop count from the first communication apparatus to the second communication apparatus are the same.

In the present relay communication apparatus, the synchronization controller synchronizes, in compliance with IEEE 1588, the timing at which the second communication apparatus transmits the first signal by broadcast and the timing at which the transmitter transmits the first signal by broadcast.

A communication method according to one exemplary embodiment of the present disclosure is performed by a relay communication apparatus, and includes: receiving a first signal transmitted by broadcast from a first communication apparatus; and transmitting the first signal by broadcast in synchronization with a timing at which a second communication apparatus receiving the first signal transmitted by broadcast from the first communication apparatus transmits the first signal by broadcast.

A communication system according to one exemplary embodiment of the present disclosure includes: a first communication apparatus; a second communication apparatus and a third communication apparatus that receive a signal transmitted by broadcast from the first communication apparatus and synchronously transmit the signal by broadcast; and a fourth communication apparatus that receives the signal synchronously transmitted by broadcast by the second communication apparatus and the third communication apparatus.

In the description of the embodiment described above, the term, such as "part" or "portion" or the term ending with a suffix, such as "-er" "-or" or "-ar" may be replaced with another term, such as "circuit (circuitry)," "device," "unit," or "module."

Although the embodiments have been described above with reference to the drawings, the present disclosure is not limited to these examples. Obviously, a person skilled in the art would arrive at variations and modifications within a scope described in claims. It is understood that these variations and modifications are within the technical scope of the present disclosure. Moreover, any combination of features of the above-mentioned embodiments may be made without departing from the spirit of the disclosure.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

When future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as, e.g., a base station, an access point, and any other apparatus, device or system that communicates with or controls apparatuses such as those in the above non-limiting examples.

The disclosure of Japanese Patent Application No. 2022-158677, filed on September 30, 2022, including the specification, drawings and abstract, is incorporated herein by reference in its entirety.

Industrial Applicability

One exemplary embodiment of the present disclosure is useful for multi-hop communication systems.

Reference Signs List

1 Communication system
10 Master terminal M
20A to 20E Relay terminals A to E
20F End terminal
100 Terminal
201 CPU
202 Storage apparatus
203 Communication apparatus
204 Equipment interface apparatus
301 Packet analyzer
302 Authentication processor
303 Link cost calculator
304 Topology manager
305 Packet generator
306 Synchronization controller

**Claims**

1. A relay communication apparatus, comprising:

   a receiver that receives a first signal transmitted by broadcast from a first communication apparatus;
   a transmitter that transmits the first signal by broadcast; and
   a synchronization controller that synchronizes a timing at which a second communication apparatus receiving the first signal transmitted by broadcast from the first communication apparatus transmits the first signal by broadcast and a timing at which the transmitter transmits the first signal by broadcast.

2. The relay communication apparatus according to claim 1, wherein:

   the transmitter transmits by unicast a second signal to a master communication apparatus in a communication system including the relay communication apparatus, the first communication apparatus, and the second communication apparatus, the second signal including information indicating that the first signal is to be transmitted by broadcast, and
   the receiver receives the first signal converted for broadcast transmission from the second signal by the master communication apparatus.

3. The relay communication apparatus according to claim 1, wherein
   the synchronization controller synchronizes, with a period dedicated to broadcast transmission, the timing at which the second communication apparatus transmits the first signal by broadcast and the timing at which the transmitter transmits the first signal by broadcast.

4. The relay communication apparatus according to claim 3, wherein
a hop count from the first communication apparatus to the relay communication apparatus and a hop count from the first communication apparatus to the second communication apparatus are the same.

5. The relay communication apparatus according to claim 1, wherein
the synchronization controller synchronizes, in compliance with IEEE 1588, the timing at which the second communication apparatus transmits the first signal by broadcast and the timing at which the transmitter transmits the first signal by broadcast.

6. A communication method performed by a relay communication apparatus, the communication method comprising:

receiving a first signal transmitted by broadcast from a first communication apparatus; and
transmitting the first signal by broadcast in synchronization with a timing at which a second communication apparatus receiving the first signal transmitted by broadcast from the first communication apparatus transmits the first signal by broadcast.

7. A communication system, comprising:

a first communication apparatus;
a second communication apparatus and a third communication apparatus that receive a signal transmitted by broadcast from the first communication apparatus and synchronously transmit the signal by broadcast; and
a fourth communication apparatus that receives the signal synchronously transmitted by broadcast by the second communication apparatus and the third communication apparatus.

FIG. 1A

| ADJACENT TERMINAL | LINK COST (RECEPTION) | LINK COST (TRANSMISSION) | UPSTREAM ROUTE COST | TENTATIVE ROUTE COST | ROUTE COST |
|---|---|---|---|---|---|
| A | 8 | 23 | 11 | 19 (8+11) | 34 (23+11) |
| C | 28 | | 20 (11+9) | 48 (28+20) | |
| D | 6 | | 30 (20+10) | 36 (6+30) | |
| E | 7 | 5 | 16 (11+5) | 23 (7+16) | 23 |

FIG. 1B

FIG. 2

FIG. 3

FIG. 4

TIME STAMP
ACQUISITION

| Preamble | TMI | Tail(6-bits) | FrameControl | Tail(6-bits) | FL | Tail(6-bits) | Frame Body | Tail(6-bits) | F-PAD |
|---|---|---|---|---|---|---|---|---|---|

FIG. 5

FIG. 6

FIG. 7

FIG. 8

EP 4 598 159 A1

Frame Header

Octets:  6          1              1          6    6    12    2          variable              variable

| DA | Frame Info | Frame Type | Station ID | Robust Control | BSSID | SA | Variant Field | FCCS | Frame Body | Padding |

Frame Control

| Sub Frame #1 | C-MARK | Sub Frame #2 | C-MARK | | C-MARK | Sub Frame #n |

| IV | Time Stamp | Length | DBSI | Sequence Number | Sub Frame Number | Receive Sequence Control | (rsvd) | Network Key Index | SHCS | Data Body | Encryption Padding | ICV | SBCS |

Bits:  64    32    12    4    16    5    1    2    8    16    variable    variable    32    32

Sub Frame Header                                              Sub Frame Body

FIG. 9

FIG. 10

FIG. 11

FIG. 12

FIG. 13

ID:0   ID:1   ID:2   ID:3   ID:0   ID:1   ID:2   ID:3   ID:0   ID:1   ID:2

FIG. 14A

50ms      50ms      50ms      50ms      50ms

P0        P1        P2        P3        P0

5ms       5ms       5ms       5ms       5ms

ID:0      ID:1      ID:2      ID:3      ID:0

TIME

FIG. 14B

## INTERNATIONAL SEARCH REPORT

| International application No. |
|---|
| **PCT/JP2023/019698** |

| A. | CLASSIFICATION OF SUBJECT MATTER |
|---|---|

*H04W 56/00*(2009.01)i; *H04W 84/18*(2009.01)i
FI:  H04W56/00; H04W84/18

According to International Patent Classification (IPC) or to both national classification and IPC

| B. | FIELDS SEARCHED |
|---|---|

Minimum documentation searched (classification system followed by classification symbols)

H04W56/00; H04W84/18

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2020-184730 A (SONAS INC., UNIV. OF TOKYO) 12 November 2020 (2020-11-12) | 1, 3-4, 6-7 |
|  | paragraphs [0026], [0029]-[0041], fig. 1, 5 |  |
| Y | paragraphs [0026], [0029]-[0041], fig. 1, 5 | 2, 5 |
| Y | JP 2020-36316 A (PANASONIC IP MANAGEMENT CORP.) 05 March 2020 (2020-03-05) | 2 |
|  | paragraphs [0028]-[0029], fig. 2 |  |
| A | entire text, all drawings | 1, 3-7 |
| Y | JP 2020-195048 A (SILEX TECHNOLOGY, INC.) 03 December 2020 (2020-12-03) | 2 |
|  | paragraphs [0010]-[0011] |  |
| A | entire text, all drawings | 1, 3-7 |
| Y | JP 2009-111654 A (NATIONAL INST. OF INFORMATION & COMMUNICATION TECHNOLOGY, CODER DENSHI KK) 21 May 2009 (2009-05-21) | 5 |
|  | paragraphs [0002], [0073]-[0081] |  |
| A | entire text, all drawings | 1-4, 6-7 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **04 July 2023** | **18 July 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** |  |
|  | Telephone No. |

Form PCT/ISA/210 (second sheet) (January 2015)

**INTERNATIONAL SEARCH REPORT**
Information on patent family members

| International application No. |
| --- |
| **PCT/JP2023/019698** |

| Patent document cited in search report | | | Publication date (day/month/year) | Patent family member(s) | Publication date (day/month/year) |
| --- | --- | --- | --- | --- | --- |
| JP | 2020-184730 | A | 12 November 2020 | WO 2020/226177 A1 paragraphs [0027], [0030]-[0042], fig. 1, 5 | |
| JP | 2020-36316 | A | 05 March 2020 | US 2020/0067817 A1 paragraphs [0039]-[0040], fig. 2 | |
| JP | 2020-195048 | A | 03 December 2020 | (Family: none) | |
| JP | 2009-111654 | A | 21 May 2009 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020036316 A

- JP 2022158677 A